# EUROPEAN PATENT APPLICATION

(11) **EP 4 836 534 A1**
(43) Date of publication of application: **04.11.2026**
(21) Application number: 23962717.7
(22) Date of filing: 28.12.2023
(51) Int. Cl.: H04W 52/02

(54) **WAKE-UP SIGNAL RECEIVING METHOD AND APPARATUS, DEVICE, MEDIUM, AND PROGRAM PRODUCT**

(71) Applicant: GUANGDONG OPPO MOBILE TELECOMMUNICATIONS CORP., LTD., Dongguan, Guangdong 523860 (CN)
(72) Inventor: ZUO, Zhisong, Dongguan, Guangdong 523860 (CN)
(74) Representative: Mewburn Ellis LLP
(86) International application number: PCT/CN2023/142941
(87) International publication number: WO 2025/138038

(57) **Abstract**

A method and an apparatus for wake-up signal (WUS) reception, a device, a medium, and a program product, which relate to the field of communication technology, are provided in the present disclosure. The method is performed by a terminal device. The terminal device includes a first receiver and a second receiver. Power consumption of the first receiver is lower than power consumption of the second receiver. The method includes the following. A first WUS is received through the first receiver. The first WUS indicates first information and second information. The first information is associated with whether to wake up the second receiver. The second information is associated with a cell corresponding to the first WUS. In the method, since the second information is associated with the cell corresponding to the first WUS, interference between different cells can be reduced. Furthermore, compared with a conventional WUS, the first WUS can provide an increased signal coverage range, such that a scope of power-saving benefits can be expanded.

## Description

### TECHNICAL FIELD

This disclosure relates to the field of communication technology, and in particular, to a method and apparatus for wake-up signal (WUS) reception, a device, a medium, and a program product.

### BACKGROUND

A terminal device configured to use a wake-up receiver (WUR) to wake up a main radio for data transmission consumes less power than a terminal device in which a main radio remains in an active state.

In the related art, a waveform of a wake-up signal (WUS) received by the WUR is a simple waveform, and a coverage range of the WUS is relatively limited, thereby limiting a scope of power-saving benefits.

### SUMMARY

A method and apparatus for wake-up signal (WUS) reception, a device, a medium, and a program product are provided in the disclosure. The technical solutions at least include the following content.

According to an aspect of embodiments of the disclosure, a method for WUS reception is provided. The method is performed by a terminal device. The terminal device includes a first receiver and a second receiver. Power consumption of the first receiver is lower than power consumption of the second receiver. The method includes the following. A first WUS is received through the first receiver. The first WUS indicates first information and second information. The first information is associated with whether to wake up the second receiver. The second information is associated with a cell corresponding to the first WUS.

According to another aspect of embodiments of the disclosure, a method for WUS transmission is provided. The method is performed by a network device. The method includes the following. A first WUS is sent. The first WUS indicates first information and second information. The first information is associated with whether to wake up a second receiver of a terminal device. The terminal device includes a first receiver and the second receiver. Power consumption of the first receiver is lower than power consumption of the second receiver. The second information is associated with a cell corresponding to the first WUS.

According to another aspect of embodiments of the disclosure, an apparatus for WUS reception is provided. The apparatus includes a first receiver and a second receiver. Power consumption of the first receiver is lower than power consumption of the second receiver. The apparatus includes a receiving module configured to receive a first WUS through the first receiver. The first WUS indicates first information and second information. The first information is associated with whether to wake up the second receiver. The second information is associated with a cell corresponding to the first WUS.

According to another aspect of embodiments of the disclosure, an apparatus for WUS transmission is provided. The apparatus includes a sending module configured to send a first WUS. The first WUS indicates first information and second information. The first information is associated with whether to wake up a second receiver of a terminal device. The terminal device includes a first receiver and the second receiver. Power consumption of the first receiver is lower than power consumption of the second receiver. The second information is associated with a cell corresponding to the first WUS.

According to another aspect of embodiments of the disclosure, a terminal device is provided. The terminal device includes a processor, a transceiver connected to the processor, and a memory configured to store executable instructions of the processor. The processor is configured to load and execute the executable instructions to perform the method for WUS reception according to the above first aspect.

According to another aspect of embodiments of the disclosure, a network device is provided. The network device includes a processor, a transceiver connected to the processor, and a memory configured to store executable instructions of the processor. The processor is configured to load and execute the executable instructions to perform the method for WUS transmission according to the above second aspect.

According to another aspect of embodiments of the disclosure, a computer-readable storage medium is provided. The computer-readable storage medium is configured to store at least one piece of program code, and the at least one piece of program code is loaded and executed by a processor to perform the method for WUS reception according to the above first aspect or the method for WUS transmission according to the above second aspect.

According to another aspect of embodiments of the disclosure, a chip is provided. The chip includes a programmable logic circuitry and/or program instructions. When the chip runs on a terminal device or a network device, the chip is configured to implement the method for WUS reception according to the above first aspect or the method for WUS transmission according to the above second aspect.

According to another aspect of embodiments of the disclosure, a computer program product or a computer program is provided. The computer program product or the computer program includes computer instructions. The computer instructions are stored in a computer-readable storage medium. A processor is configured to obtain the computer instructions stored in the computer-readable storage medium, and to execute the computer instructions to implement the method for WUS reception according to the above first aspect or the method for WUS transmission according to the above second aspect.

The technical solutions provided by embodiments of the disclosure may include the following advantages. The first WUS is received through the first receiver. The first WUS indicates the first information and the second information. The first information is associated with whether to wake up the second receiver. The second information is associated with the cell corresponding to the first WUS. Since the second information is associated with the cell corresponding to the first WUS, interference between different cells can be reduced. Furthermore, compared with a conventional WUS, the first WUS can provide an increased signal coverage range, such that a scope of power-saving benefits can be expanded.

### BRIEF DESCRIPTION OF THE DRAWINGS

In order to describe more clearly the technical solutions of embodiments of the disclosure more clearly, the following briefly introduces the accompanying drawings required for describing the embodiments. Apparently, the accompanying drawings described below are merely some embodiments of the disclosure. Based on these accompanying drawings, those of ordinary skill in the art may also obtain other drawings without creative efforts.
FIG. 1 is a schematic diagram illustrating a discontinuous reception (DRX) transmission mechanism provided by the related art.
FIG. 2 is a schematic diagram of a receiver system provided by the related art.
FIG. 3 is a schematic diagram of a communication system provided by an exemplary embodiment of the disclosure.
FIG. 4 is a flow chart of a method for WUS transmission provided by an exemplary embodiment of the disclosure.
FIG. 5 is a schematic diagram illustrating performing of control channel detection provided by an exemplary embodiment of the disclosure.
FIG. 6 is a schematic diagram illustrating modulation of a first WUS provided by an exemplary embodiment of the disclosure.
FIG. 7 is a schematic diagram illustrating modulation of a first WUS provided by an exemplary embodiment of the disclosure.
FIG. 8 is a flow chart of a method for WUS reception provided by an exemplary embodiment of the disclosure.
FIG. 9 is a schematic diagram of a communication scenario provided by an exemplary embodiment of the disclosure.
FIG. 10 is a block diagram of an apparatus for WUS transmission provided by an exemplary embodiment of the disclosure.
FIG. 11 is a block diagram of an apparatus for WUS reception provided by an exemplary embodiment of the disclosure.
FIG. 12 is a schematic structural diagram illustrating a terminal device or a network device provided by an exemplary embodiment of the disclosure.

### DETAILED DESCRIPTION

To make the objectives, technical solutions, and advantages of the disclosure clearer, the following further describes implementations of the disclosure in detail with reference to the accompanying drawings. Exemplary embodiments are described in detail herein, and examples thereof are illustrated in the accompanying drawings. When the following description relate to the accompanying drawings, unless otherwise stated, the same numerals in different accompanying drawings refer to the same or similar elements. The implementations described in the following exemplary embodiments are not intended to represent all implementations consistent with the implementations of the disclosure. On the contrary, they are merely examples of apparatuses and methods consistent with some aspects of the disclosure as elaborated in the appended claims.

The terms used in the disclosure are merely intended for describing particular embodiments, rather than limiting the disclosure. The terms "a/an", "said", and "the" used in the disclosure and the appended claims are also intended to include multiple forms, unless specified otherwise in the context. It may be further understood that, the term "and/or" used herein refers to and includes any or all possible combinations of one or more associated listed items.

It may be understood that, although the terms "first", "second", "third", etc., may be used in the disclosure to describe multiple types of information, the information may not be limited to these terms. These terms are merely used to distinguish multiple types of information from each other. For example, without departing from the scope of the disclosure, "first information" may also be referred to as "second information", and similarly, "second information" may also be referred to as "first information". Depending on the context, the term "if" used herein may be interpreted as "when" or "upon" or "determining in response to".

The technical solutions described in some embodiments of the disclosure may be applicable to various communication systems, such as a global system of mobile communication (GSM), a code division multiple access (CDMA) system, a wideband code division multiple access (WCDMA) system, a general packet radio service (GPRS) system, a long term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN) system, a wireless fidelity (WiFi) system, a 5th-generation (5G) communication system, a cellular internet of things (IoT) system, a cellular passive IoT system, or may also be applicable to a subsequent evolved system of a 5G NR system, or may also be applicable to a 6th-generation (6G) system and a subsequent evolved system of the 6G system.

It may be understood that, in some embodiments of the disclosure, "5G" may also be referred to as "5G NR" or "NR".

It may be understood that, in the elaboration of embodiments of the disclosure, the term "correspondence" may mean that there is a direct correspondence or an indirect correspondence between the two, may mean that there is an association between the two, or may mean a relationship of indicating and indicated or configuring and configured, etc.

In embodiments of the disclosure, the "predefined" may be implemented by pre-saving a corresponding code or table in a device (for example, including a terminal device and a network device) or in other manners that can be used for indicating relevant information, and the disclosure is not limited in this regard. For example, the "predefined" may mean defined in a protocol.

In embodiments of the disclosure, the "protocol" may refer to a communication standard protocol, which may include, for example, an LTE protocol, an NR protocol, and a related protocol applied to a future communication system, and the disclosure is not limited in this regard.

Discontinuous reception (DRX) is described below.

For power saving of a terminal device, a related communication system can support a DRX mechanism. A main principle of the DRX mechanism is to achieve DRX of signals in a time domain through a semi-static configuration. When there is no data for transmission, power consumption may be reduced by stopping physical downlink control channel (PDCCH) reception.

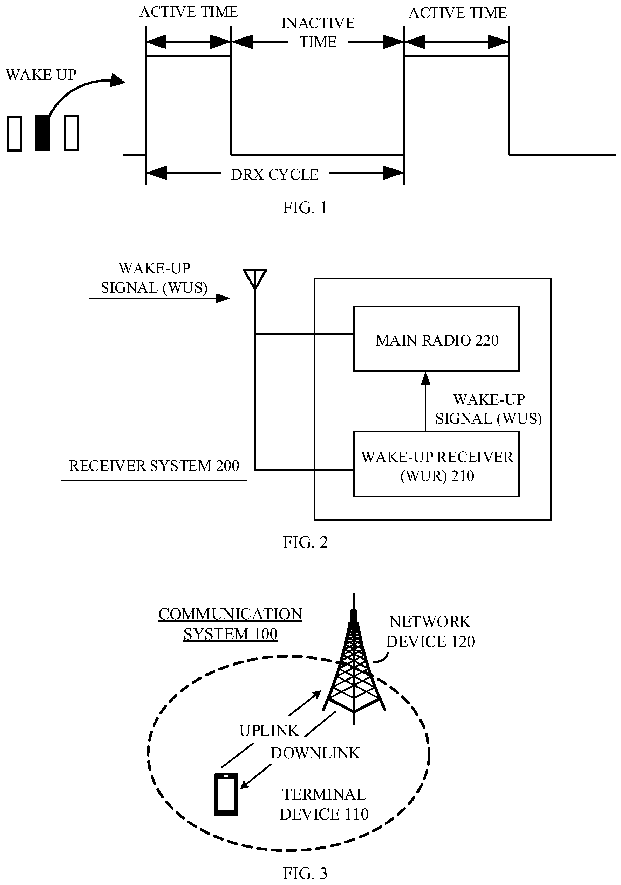

A manner for DRX configuration is that a DRX cycle is configured for a terminal device in a radio resource control (RRC) connected state (RRC_CONNECTED). FIG. 1 is a schematic diagram illustrating a DRX transmission mechanism provided by the related art. A DRX cycle consists of an active time and an inactive time. During the active time, the terminal device performs PDCCH monitoring and PDCCH reception. During the inactive time, the terminal device does not perform PDCCH reception to reduce power consumption.

A wake-up signal (WUS) is described below.

In the related art, a DRX mechanism may be used in combination with a WUS. A terminal device receives an indication in a WUS before a DRX ON duration. As illustrated in FIG. 1, when the terminal device has data for transmission within one DRX cycle, a WUS wakes up the terminal device to perform PDCCH detection during the DRX ON duration; and when the terminal device does not have data for transmission within one DRX cycle, a WUS does not wake up the terminal device, and the terminal device does not need to perform PDCCH detection during the DRX ON duration. Compared with a related DRX mechanism, when the terminal device does not have data for transmission, the terminal device may omit PDCCH detection during the DRX ON duration, such that power saving can be achieved. A time before a DRX ON duration of the terminal device can be referred to as an inactive time, and the DRX ON duration of the terminal device can be referred to as an active time. A DRX WUS has a waveform and a structure similar to those of a PDCCH.

A receiver system is described below.

FIG. 2 is a schematic diagram of a receiver system 200 provided by the related art. The receiver system 200 includes a wake-up receiver (WUR) 210 and a main radio 220.

In some embodiments, the main radio 220 may be equivalently understood as a main transceiver or a main air-interface communication unit.

To further save power, a WUR is introduced for receiving a WUS. The WUR has characteristics of ultra-low cost, ultra-low complexity, and ultra-low power consumption, and mainly receives a WUS through envelope detection. For other manners, a manner similar to using a conventional receiver is not excluded. In short, power consumption of a WUR is several orders of magnitude lower than power consumption of a conventional sleep mode. Generally, the power consumption of a conventional receiver is more than 100 milliwatts (mW), while the power consumption of a low-power receiver may be less than 1 milliwatt.

Therefore, a WUS received by the WUR is different, in terms of modulation scheme, waveform, etc., from a signal defined in a related standard and carried by a PDCCH. A WUS may be an envelope signal obtained by performing amplitude shift keying (ASK) modulation on a carrier signal. Demodulation of an envelope signal may be completed by a low-power circuit driven by energy provided by a radio frequency (RF) signal, therefore, the WUR may operate passively. The WUR may also be actively powered by a terminal device. Regardless of a power supply manner, the power consumption of the WUR is greatly reduced compared with that of a conventional receiver. For example, the WUR may achieve power consumption of less than 1 milliwatt, which is much lower than power consumption of tens to hundreds of milliwatts typically consumed by a main radio. The WUR may be integrated into a terminal device as an additional module of a receiver of the terminal device, or may exist independently as a wake-up function module of the terminal device.

As illustrated in FIG. 1, in an initial state, the WUR 210 is in an on state, and the main radio 220 is in an off state. The WUR 210 receives a WUS and determines whether to wake up the main radio 220 according to an indication in the WUS. If the main radio 220 needs to be woken up, a network device may send a WUS to the WUR 210, and the WUR 210 wakes up the main radio 220 upon receiving the WUS. Otherwise, the main radio 220 remains in the off state.

In some embodiments, when a WUS is sent, it indicates waking up; and when no WUS is sent, it indicates not waking up.

In some embodiments, when a WUS carrying a wake-up indication is sent, the WUS indicates waking up; and when a WUS carrying a not-wake-up indication is sent, the WUS indicates not waking up.

The WUR may be activated by the WUS at any time to receive the WUS. For example, a WUS adopts on-off keying (OOK) modulation. A principle of OOK modulation is to modulate an amplitude of a carrier signal into a non-zero value (1) and a zero value (0), which are respectively corresponding to "On" and "Off", to represent an information bit. OOK is also referred to as binary ASK (2-ASK). For example, "bit 1" is modulated to "On", and "bit 0" is modulated to "Off".

FIG. 3 is a schematic diagram of a communication system 100 provided by an exemplary embodiment of the disclosure. The communication system 100 includes a terminal device 110 and a network device 120.

The terminal device 110 in the disclosure may also be referred to as a user equipment (UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal includes but is not limited to a handheld device, a wearable device, a vehicle-mounted device, an IoT device, etc., such as a mobile phone, a tablet computer, an e-book reader, a laptop portable computer, a desktop computer, a television, a game console, a mobile internet device (MID), an augmented reality (AR) terminal, a virtual reality (VR) terminal, a mixed reality (MR) terminal, a wearable device, a handle, an electronic tag, a controller, a wireless terminal in industrial control, a wireless terminal in self-driving, a wireless terminal in remote medical, a wireless terminal in a smart grid, a wireless terminal in transportation safety, a wireless terminal in smart city, a wireless terminal in smart home, a wireless terminal in remote medical surgery, a cellular phone, a cordless phone, a session initiation protocol (SIP) phone, a wireless local loop (WLL) station, a personal digital assistant (PDA), a set top box (STB), or a customer premises equipment (CPE), etc.

The network device 120 in the disclosure provides a wireless communication function. The network device 120 includes but is not limited to an evolved Node B (eNB), a radio network controller (RNC), a Node B (NB), a base station controller (BSC), a base transceiver station (BTS), a home base station (e.g., a home evolved Node B or a home Node B (HNB)), a baseband unit (BBU), an access point (AP) in a Wi-Fi system, a wireless relay node, a wireless backhaul node, a transmission point (TP), a transmission and reception point (TRP), etc. The network device 120 may also be a next-generation Node B (gNB) or a TP/TRP in a 5G mobile communication system, or one or a group of antenna panels (including multiple antenna panels) of a base station in a 5G system, or a network node forming a gNB or a TP, such as a BBU or a distributed unit (DU). The network device 120 may also be a base station in a beyond-5G (B5G) mobile communication system, a 6G mobile communication system, etc., or a core network (CN), a fronthaul, a backhaul, a radio access network (RAN), a network slice, etc., or a serving cell, a primary cell (PCell), a primary secondary cell (PSCell), a special cell (SpCell), a secondary cell (SCell), a neighboring cell of a terminal device, etc.

The terminal device 110 and the network device 120 communicate with each other via a certain air interface technology, for example, a Uu interface.

Exemplarily, there are two communication scenarios between the terminal device 110 and the network device 120: an uplink (UL) communication scenario and a downlink (DL) communication scenario. The UL communication refers to that the terminal device 110 sends a signal to the network device 120. The DL communication refers to that the network device 120 sends a signal to the terminal device 110.

The technical solutions provided by embodiments of the disclosure may be applicable to various communication systems, for example: a GSM system, a CDMA system, a WCDMA system, a GPRS, an LTE system, an LTE-A system, an LTE frequency division duplex (FDD) system, an LTE time-division duplex (TDD) system, a UMTS, a worldwide interoperability for microwave access (WiMAX) communication system, a 5G mobile communication system, an NR system, an evolved system of the NR system, an LTE-U system, an NR-U system, an NTN system, a non-NTN system, a WLAN system, a Wi-Fi system, a cellular IoT system, a cellular passive IoT system, or may also be applicable to a subsequent evolved system of a 5G NR system, or may also be applicable to a subsequent evolved system of a B5G system and a 6G system.

In some embodiments of the disclosure, "NR" may also be referred to as a 5G NR system or a 5G system. A 5G mobile communication system may include non-standalone (NSA) networking and/or standalone (SA) networking.

Technical solutions provided by embodiments of the disclosure may also be applicable to machine type communication (MTC), long term evolution-machine (LTE-M), a device-to-device (D2D) network, a machine-to-machine (M2M) network, an IoT network, or other networks. The IoT network may include, for example, an internet of vehicles network. A communication manner in an internet of vehicles system is collectively referred to as vehicle-to-X (V2X, where X may represent everything). For example, the V2X may include vehicle-to-vehicle (V2V) communication, vehicle-to-infrastructure (V2I) communication, vehicle-to-pedestrian (V2P) communication, or vehicle-to-network (V2N) communication, etc.

A terminal device configured to use a WUR to wake up a main radio for data transmission consumes less power than a terminal device in which a main radio remains in an active state. In the related art, a waveform of a WUS received by a WUR is a simple waveform, and a coverage range of the WUS is relatively limited, thereby limiting a scope of power-saving benefits. Furthermore, such a WUS with a simple waveform is sent via a single carrier, which causes a problem that energy spectrum is overly concentrated at a single frequency point, resulting in relatively poor robustness and excessive frequency selectivity of the WUS. That is, the WUS is prone to being altered during transmission. To address the above problem, a first WUS is provided in embodiments of the disclosure.

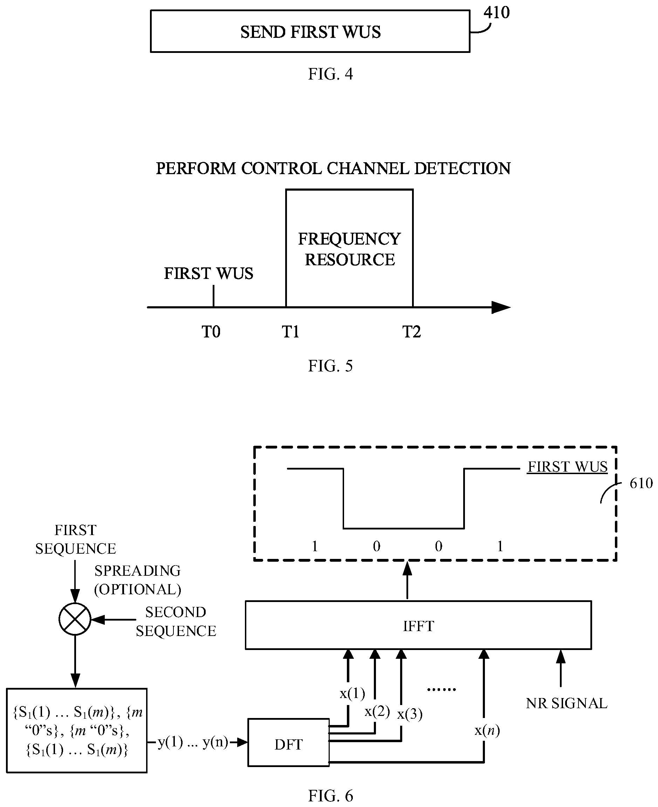

FIG. 4 is a flow chart of a method for WUS transmission provided by an exemplary embodiment of the disclosure. The method is performed by a network device. The method includes the following.

In step 410, a first WUS is sent.

The first WUS indicates first information and second information. The first information is associated with whether to wake up a second receiver of a terminal device. The terminal device includes a first receiver and the second receiver. Power consumption of the first receiver is lower than power consumption of the second receiver. The second information is associated with a cell corresponding to the first WUS.

In some embodiments, the first WUS is a signal received by the first receiver or a signal supported by the first receiver.

In some embodiments, the first WUS is a signal obtained through two-level modulation. First-level modulation is performed based on the first information to obtain an intermediate signal. Second-level modulation is performed on the intermediate signal based on the second information to obtain the first WUS. With the first WUS obtained through multi-level modulation, frequency response at multiple subcarrier positions may be increased, such that energy spectrum may be evenly distributed. As a result, the first WUS has relatively strong robustness, thereby increasing a coverage range of the first WUS.

In some embodiments, whether the first WUS is received indicates whether to wake up the second receiver of the terminal device to perform control channel detection. The control channel detection includes at least one of DRX detection, paging detection, or PDCCH detection.

In some embodiments, when the first WUS is received, it indicates waking up the second receiver of the terminal device to perform control channel detection; and when no first WUS is received, it indicates that the second receiver of the terminal device is not required to be woken up, and control channel detection is not performed.

A manner for generating a third sequence includes a first generation manner and a second generation manner. Different embodiments may use any one of the two generation manners.

### First Generation Manner

In some embodiments, the first WUS is generated based on a third sequence. The third sequence is a sequence generated based on a first sequence and a second sequence. The first sequence indicates the first information. The second sequence indicates the second information.

In some embodiments, the second sequence is a sequence associated with the cell corresponding to the first WUS. The second sequence includes at least one of: a complex sequence, such as a constant amplitude zero auto correlation (CAZAC) sequence, a Zaddoff Chu (ZC) sequence, etc.; or a real sequence, such as a pseudo-noise (PN) sequence, a Gold sequence, an M sequence, a Hadamard sequence, etc.

Exemplarily, the first sequence is {1, 0, 0, 1} which indicates waking up the second receiver, and the second sequence is {S₁, S₂, S₃} which indicates the cell corresponding to the first WUS, for example, cell 1.

Alternatively, the first sequence is {0, 0, 0, 1} which indicates not waking up the second receiver, and the second sequence is {S₁, S₂} which indicates the cell corresponding to the first WUS, for example, cell 2.

The first sequence indicates the first information, and the second sequence indicates the second information, so that the terminal device can obtain cell-related information and information about waking up the second receiver, such that inter-cell interference can be reduced.

### Second Generation Manner

In some embodiments, the first WUS is generated based on a third sequence. The third sequence is a sequence generated based on a first sequence and a second sequence. The second sequence indicates both the first information and the second information.

Exemplarily, the first sequence is {1, 0} which indicates waking up the second receiver, and the second sequence is {S₁₀, S₂₀, S₃₀} which indicates waking up the second receiver and the cell corresponding to the first WUS, for example, cell 1.

Alternatively, the first sequence is {0, 1} which indicates other information, and the second sequence is {S₁₁, S₂₁, S₃₁} which indicates waking up the second receiver and the cell corresponding to the first WUS, for example, cell 2.

The second sequence indicates both the first information and the second information, such that the terminal device can obtain cell-related information and information about waking up the second receiver from the second sequence, and the first information and the second information can be indicated without the first sequence. Therefore, the first sequence may indicate other information.

In some embodiments, the first sequence indicates the first information. For example, the first sequence is {1, 0} which indicates waking up the second receiver.

The second sequence indicates both the first information and the second information, and the first sequence indicates the first information, which is equivalent to providing two indications of the first information, thereby improving reliability for obtaining information for waking up the second receiver.

In some embodiments, the third sequence is a sequence generated by multiplying the first sequence and the second sequence; or the third sequence is a sequence generated by modulating the first sequence and the second sequence; or the third sequence is a sequence generated by multiplying a fourth sequence and the second sequence, where the fourth sequence is obtained by performing spreading on the first sequence; or the third sequence is a sequence generated by modulating the fourth sequence and the second sequence.

Optionally, spreading is not performed on the first sequence, and the third sequence is generated by multiplying (or modulating) the first sequence and the second sequence. Alternatively, spreading is performed on the first sequence to obtain the fourth sequence, and the third sequence is generated by multiplying (or modulating) the fourth sequence and the second sequence.

In some embodiments, each bit having a value of 0 in the first sequence or each bit having a value of 0 in the fourth sequence is not multiplied by any element in the second sequence.

In some embodiments, each bit having a value of 1 in the first sequence is multiplied by a corresponding element in the second sequence to generate the third sequence.

In some embodiments, each bit having a value of 1 in the fourth sequence is multiplied by a corresponding element in the second sequence to generate the third sequence.

Exemplarily, the first sequence is {1, 1} and the second sequence is {S₁, S₂}. The third sequence is generated by multiplying the first sequence and the second sequence, where each bit having a value of 1 in the first sequence is multiplied by a corresponding element in the second sequence to generate the third sequence of {S₁, S₂, S₁, S₂}.

In some embodiments, an i-th bit having a value of 1 in the first sequence is multiplied by an i-th element in the second sequence to generate the third sequence. The number of (a quantity of) bits having a value of 1 in the first sequence is equal to the number of elements in the second sequence. The second sequence includes x elements, and *i* is a positive integer not greater than x.

In some embodiments, an i-th bit having a value of 1 in the fourth sequence is multiplied by an i-th element in the second sequence to generate the third sequence. The number of bits having a value of 1 in the first sequence is equal to the number of elements in the second sequence. The second sequence includes x elements, and *i* is a positive integer not greater than x.

Exemplarily, in a case that the first sequence is {1, 0} and a spreading factor is 4, spreading is performed on the first sequence of {1, 0} to obtain the fourth sequence, that is, {1, 1, 1, 1, 0, 0, 0, 0}. The second sequence is {S₁, S₂, S₃, S₄}, and the third sequence is generated by multiplying the fourth sequence and the second sequence, where an i-th bit having a value of 1 in the fourth sequence is multiplied by an *i*-th element in the second sequence to generate the third sequence, that is, {S₁, S₂, S₃, S₄, 0, 0, 0, 0}.

In some embodiments, the second sequence includes *x* elements. A *k*-th bit in the first sequence is multiplied by an *i*-th element in the second sequence to generate the third sequence, where *i=k* mod *x,* and *i* is a positive integer not greater than *x.* The first sequence includes *y* bits, and *k* is a positive integer not greater than *y.*

In some embodiments, the second sequence includes *x* elements. A *k*-th bit in the fourth sequence is multiplied by an *i*-th element in the second sequence to generate the third sequence, where *i=k* mod *x,* and *i* is a positive integer not greater than *x.* The fourth sequence includes z bits, and *k* is a positive integer not greater than *z*.

Exemplarily, the second sequence is {S₁, S₂, S₃} which includes three elements, the first sequence is {1, 1, 1, 0, 0, 0, 1, 1, 1, 0, 0, 0}, and a *k*-th bit in the first sequence is multiplied by an *i*-th element in the second sequence to generate the third sequence, that is, {S₁, S₂, S₃, 0, 0, 0, S₁, S₂, S₃, 0, 0, 0}.

The first WUS is generated based on the third sequence, and the third sequence is generated by multiplying the first sequence (or the fourth sequence) and the second sequence, so that the first WUS can indicate both the first information and the second information.

In some embodiments, a spreading factor for the first sequence is determined based on a length of the second sequence.

In some embodiments, a value of the spreading factor includes at least one of: a value of the length of the second sequence, or a quotient of the value of the length of the second sequence and a first number (quantity). The first number is the number of bits having a value of 1 in the first sequence.

Exemplarily, the first sequence is {1, 0, 1, 0}, thus the first number is 2; and the second sequence is {S₁, S₂, S₃, S₄, S₅, S₆}, thus the value of the length of the second sequence is 6. Therefore, the value of the spreading factor may be 6 or 3 (a quotient of 6 and 2). The value of the spreading factor may also be other values, which is not limited in embodiments of the disclosure.

In some embodiments, modulation manners for the first WUS include a first modulation manner and a second modulation manner. In different embodiments, any one of the two modulation manners may be used. A Fourier transform is performed on the third sequence in the first modulation manner, and a Fourier transform is not performed on the third sequence in the second modulation manner.

First modulation manner: The first WUS is generated by performing an inverse Fourier transform on at least one subcarrier. The at least one subcarrier is a subcarrier onto which the third sequence subjected to a Fourier transform is mapped.

In some embodiments, the first sequence indicates the first information. The second sequence indicates the second information. The first information is associated with whether to wake up the second receiver. The second information is associated with the cell corresponding to the first WUS.

In some embodiments, the first WUS is generated based on the third sequence. The third sequence is a sequence generated based on the first sequence and the second sequence.

In some embodiments, FIG. 6 is a schematic diagram illustrating modulation of a first WUS provided by an exemplary embodiment of the disclosure. The first WUS is modulated as follows.

In step 11, a first sequence is obtained.

In some embodiments, the first sequence is any one of: an original sequence that does not require encoding, an original sequence before encoding, an encoded sequence obtained after encoding the original sequence, or an encoded sequence obtained after performing at least one level of encoding in multi-level encoding on the original sequence.

In step 12, the first sequence is multiplied by a second sequence to generate a third sequence.

In some embodiments, spreading is performed on the first sequence. The spreading refers to repeating each bit or each element in a sequence for *K* times, where *K* is a positive integer greater than 1. Taking spreading as an example, assuming that the first sequence is {1, 0, 0, 1} and a spreading factor *K*=4, then a sequence of {1, 1, 1, 1, 0, 0, 0, 0, 0, 0, 0, 0, 1, 1, 1, 1} may be obtained through spreading. In this example, a case where spreading is not performed on the first sequence is used for illustration.

In some embodiments, the second sequence is a sequence associated with the cell corresponding to the first WUS. The second sequence includes at least one of: a complex sequence, such as a CAZAC sequence, a ZC sequence, etc.; or a real sequence, such as a PN sequence, a Gold sequence, an *M* sequence, a Hadamard sequence, etc.

In some embodiments, the second sequence is {S₁(1), S₁(2), ..., S₁(*m*)}, and a value of *m* is equal to the value of the length of the second sequence. With an example where *m* is 3 for illustration, the second sequence is {S₁(1), S₁(2), S₁(3)}.

In some embodiments, the third sequence is a sequence generated by multiplying the first sequence and the second sequence, for example, the third sequence is {S₁(1), S₁(2), S₁(3), 0, 0, 0, 0, 0, 0, S₁(1), S₁(2), S₁(3)}, where y(1) corresponds to S₁(1), y(2) corresponds to S₁(2), y(3) corresponds to S₁(3), y(4) corresponds to 0, and so on until y(12) corresponds to S₁(3).

In step 13, a time-frequency transform is performed on the third sequence to obtain *n* subcarriers.

In some embodiments, a time-frequency transform, that is, a discrete Fourier transform (DFT), refers to transforming a sequence (a third sequence) in a time domain into frequency-domain data at multiple sampling points. The frequency-domain data obtained after the time-frequency transform is modulated onto at least one subcarrier, for example, *n* subcarriers. *n* is the number of elements in the third sequence. *n* is a positive integer multiple of *m,* and a value of *n* may be selected from {2, 4, 6, 8, 12, 16, 24, 36, 48, 60, 72} or another positive integer. In this example, a value of *n* is 12.

In step 14, an inverse time-frequency transform is performed on the *n* subcarriers to generate the first WUS.

In some embodiments, an invert fast Fourier transformation (IFFT) is performed on the *n* subcarrier signals to generate the first WUS. A waveform of the first WUS in the time domain is represented as a first waveform 610.

In some embodiments, before the IFFT is performed on the *n* subcarrier signals, the *n* subcarrier signals may be multiplexed with another NR signal. An orthogonal frequency division multiplexing (OFDM) symbol length of another NR signal is a positive integer multiple of a chip length of the first WUS. The chip length of the first WUS is equal to a length of each symbol, for example, a length of a symbol "1" in the first WUS or a length of a symbol "0" in the first WUS, as illustrated in FIG. 6.

DFT is performed on the third sequence, and the OFDM symbol length of another NR signal is a positive integer multiple of the chip length of the first WUS, so that one OFDM symbol can be used to transmit multiple chip information.

Second modulation manner: The first WUS is generated by performing an inverse Fourier transform on at least one subcarrier. The at least one subcarrier is a subcarrier onto which the third sequence is mapped.

In some embodiments, the first sequence indicates the first information. The second sequence indicates the second information. The first information is associated with whether to wake up the second receiver. The second information is associated with the cell corresponding to the first WUS.

In some embodiments, the first WUS is generated based on the third sequence. The third sequence is a sequence generated based on the first sequence and the second sequence.

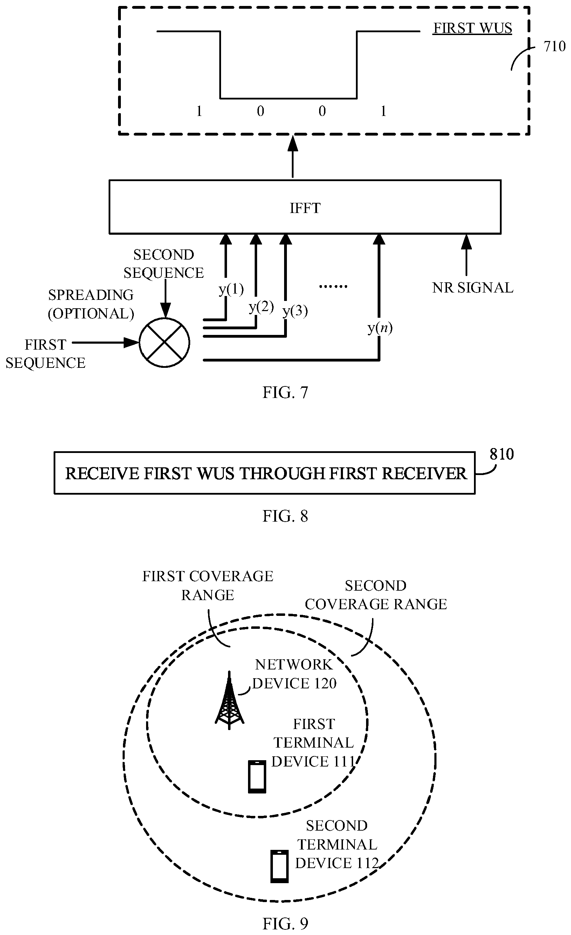

In some embodiments, FIG. 7 is a schematic diagram illustrating modulation of a first WUS provided by an exemplary embodiment of the disclosure. The first WUS is modulated as follows.

In step 21, a first sequence is obtained.

In some embodiments, the first sequence is any one of: an original sequence that does not require encoding, an original sequence before encoding, an encoded sequence obtained after encoding the original sequence, or an encoded sequence obtained after performing at least one level of encoding in multi-level encoding on the original sequence.

In step 22, the first sequence is multiplied by a second sequence to generate a third sequence.

In some embodiments, spreading is performed on the first sequence. The spreading refers to repeating each bit or each element in a sequence for *K* times, where *K* is a positive integer greater than 1. Taking spreading as an example, assuming that the first sequence is {1, 0, 0, 1} and a spreading factor *K*=4, then a sequence of {1, 1, 1, 1, 0, 0, 0, 0, 0, 0, 0, 0, 1, 1, 1, 1} may be obtain through spreading. In this example, a case where spreading is not performed on the first sequence is used for illustration.

In some embodiments, the second sequence is a sequence associated with the cell corresponding to the first WUS. The second sequence includes at least one of: a complex sequence, such as a CAZAC sequence, a ZC sequence, etc.; or a real sequence, such as a PN sequence, a Gold sequence, an *M* sequence, a Hadamard sequence, etc.

In some embodiments, the second sequence is {S₁(1), S₁(2), ..., S₁(*m*)}, and a value of *m* is equal to the value of the length of the second sequence. With an example where *m* is 3 for illustration, the second sequence is {S₁(1), S₁(2), S₁(3)}.

In some embodiments, the third sequence is a sequence generated by multiplying the first sequence and the second sequence, for example, the third sequence is {S₁(1), S₁(2), S₁(3), 0, 0, 0, 0, 0, 0, S₁(1), S₁(2), S₁(3)}, where y(1) corresponds to S₁(1), y(2) corresponds to S₁(2), y(3) corresponds to S₁(3), y(4) corresponds to 0, and so on until y(12) corresponds to S₁(3).

In step 23, the third sequence is mapped onto *n* subcarriers.

In some embodiments, a DFT is not performed on the third sequence, and the third sequence is directly mapped onto *n* subcarriers. *n* is the number of elements in the third sequence. *n* is a positive integer multiple of *m,* and a value of *n* may be selected from {2, 4, 6, 8, 12, 16, 24, 36, 48, 60, 72} or another positive integer. In this example, a value of *n* is 12.

In step 24, an inverse time-frequency transform is performed on the *n* subcarriers to generate the first WUS.

In some embodiments, an IFFT is performed on the *n* subcarrier signals to generate the first WUS. A waveform of the first WUS in the time domain is represented as a second waveform 710.

In some embodiments, before the IFFT is performed on the *n* subcarrier signals, the *n* subcarrier signals may be multiplexed with another NR signal. An OFDM symbol length of another NR signal is equal to a chip length of the first WUS. The chip length of the first WUS is equal to a length of each symbol, for example, a length of a symbol "1" in the first WUS or a length of a symbol "0" in the first WUS, as illustrated in FIG. 7.

By not performing the DFT or another pre-transformation on the third sequence, the OFDM symbol length of another NR signal is equal to the chip length of the first WUS, resulting in better compatibility between the first WUS and another NR signal (an OFDM signal).

In some embodiments, multiple candidate sequences are preset for the second sequence. Each candidate sequence has a respective corresponding sequence identification (ID), and each candidate sequence corresponds to one or more cells. In other words, each candidate sequence corresponds to one or more cell IDs. The cell corresponding to the first WUS is a first cell. An association between a sequence ID of the second sequence and a cell ID of the first cell includes the following. The sequence ID is a value obtained by performing a modulo operation on the cell ID with the total number of (a total quantity of) sequences. The total number of sequences is the total number of cell IDs.

Exemplarily, sequence ID=cell ID mod *X,* where *X* represents the total number of sequences, and the cell ID is equal to a selected sequence ID. When there are 20 cells (cell IDs are 0 to 19), the cell ID is divided by 20 to obtain a remainder, and the remainder is a value ranging from 0 to 19. If the value is 8, a sequence with a sequence ID of 8 is selected.

Optionally, the total number of sequences is the number of sequences associated with cell IDs. The sequences associated with cell IDs include the second sequence.

Exemplarily, sequence ID=cell ID mod *X,* where *X* represents the total number of sequences, and the cell ID is equal to a selected sequence ID. When there are 128 cells (cell IDs are 0 to 127) and 20 sequences associated with cell IDs (sequence IDs are 0 to 19), the cell ID is divided by 20 to obtain a remainder, and the remainder is a value ranging from 0 to 19. If the value is 8, a sequence with a sequence ID of 8 is selected.

There may be another association(s) between the sequence ID of the second sequence and the cell ID of the first cell, and embodiments of the disclosure are not limited in this regard. With different associations between sequence IDs and cell IDs, requirements for a sequence ID and a cell ID in multiple scenarios can be met.

In some embodiments, the first WUS further carries ID information of a target terminal device. When the first WUS carries the ID information of the target terminal device, the first WUS is received by the target terminal device.

In some embodiments, the first WUS further carries group ID information of a target terminal device group. When the first WUS carries the group ID information of the target terminal device group, the first WUS is received by all or part of terminal devices in the target terminal device group.

In some embodiments, waking up a terminal device is indicated by ID information or group ID information, or waking up a terminal device is indicated by mapping different ID information or different group ID information through a bitmap.

To sum up, according to the method provided in this embodiment, the first WUS is sent. The first WUS indicates the first information and the second information. The first information is associated with whether to wake up the second receiver of a terminal device. The terminal device includes the first receiver and the second receiver. Power consumption of the first receiver is lower than power consumption of the second receiver. The second information is associated with the cell corresponding to the first WUS. Since the second information is associated with the cell corresponding to the first WUS, interference between different cells can be reduced. In addition, compared with a conventional WUS, the first WUS can provide an increased signal coverage range, such that a scope of power-saving benefits can be expanded.

The first WUS in the method provided by the embodiment is obtained through multi-level modulation. With such a first WUS, frequency response at multiple subcarrier positions can be increased, such that energy spectrum of the first WUS may be evenly distributed. As a result, the first WUS has relatively strong robustness, thereby increasing a coverage range of the first WUS.

FIG. 8 is a flow chart of a method for WUS reception provided by an exemplary embodiment of the disclosure. The method is performed by a terminal device. The terminal device includes a first receiver and a second receiver. Power consumption of the first receiver is lower than power consumption of the second receiver. The method includes the following.

In step 810, a first WUS is received through the first receiver.

The first WUS indicates first information and second information. The first information is associated with whether to wake up the second receiver. The second information is associated with a cell corresponding to the first WUS.

In some embodiments, control channel detection is performed based on the first WUS. The control channel detection includes at least one of DRX detection, paging detection, or PDCCH detection.

In some embodiments, the terminal device detects signal quality of the first WUS. The signal quality is determined by a signal to interference plus noise ratio (SINR) or a signal strength. The SINR refers to a ratio of a signal to noise and is usually in a unit of decibel (dB). When a value of the SINR is relatively large, it indicates that there is little noise and the signal quality is relatively good. When a value of the SINR is relatively small, it indicates that there is much noise and the signal quality is relatively poor. The signal strength refers to a strength or a power level of a received signal and is usually in a unit of decibel milliwatt (dBm). When a value of the signal strength is relatively large, it indicates that the signal strength is relatively high. When a value of the signal strength is relatively small, it indicates that the signal strength is relatively low.

In some embodiments, when the signal quality of the first WUS is greater than a first threshold, control channel detection is performed based on a time-domain resource associated with the first information and a frequency-domain resource associated with the first information; and when the signal quality of the first WUS is less than the first threshold, control channel detection is performed.

In some embodiments, the first threshold is a preset threshold or a threshold configured by a network device.

In some embodiments, when the signal quality of the first WUS is equal to the first threshold, control channel detection is performed based on a time-domain resource associated with the first information and a frequency-domain resource associated with the first information, or control channel detection is directly performed.

Exemplarily, the first threshold is -60 dBm. When a signal strength of the first WUS is -50 dBm, which is greater than -60 dBm, control channel detection is performed based on a time-domain resource associated with the first information and a frequency-domain resource associated with the first information. As illustrated in FIG. 5, the first WUS is received at time instant *T0,* a time period between time instant *T1* and moment *T2* is a first slot after the first WUS is received, and the first slot is a time-domain resource associated with the first information. At a start of the first slot, control channel detection is performed in a frequency-domain resource indicated by a control resource set (CORESET). The frequency-domain resource indicated by the CORESET is a frequency-domain resource associated with the first information. When a signal strength of the first WUS is -70 dBm, which is less than -60 dBm, control channel detection is directly performed.

The signal quality of the first WUS is greater than the first threshold, which may indicate that the first WUS is successfully received, and control channel detection is performed according to the time-domain resource associated with the first information and the frequency-domain resource associated with the first information. The signal quality of the first WUS is less than the first threshold, which may indicate that the first WUS is not successfully received. Compared with continuing to attempt to receive the first WUS before performing control channel detection, directly performing control channel detection can reduce power consumption of the terminal device.

In some embodiments, the first WUS is generated based on a third sequence. The third sequence is a sequence generated based on a first sequence and a second sequence. The first sequence indicates the first information. The second sequence indicates the second information.

In some embodiments, the first WUS is generated based on a third sequence. The third sequence is a sequence generated based on a first sequence and a second sequence. The second sequence indicates both the first information and the second information.

In some embodiments, the first sequence indicates the first information.

In some embodiments, the third sequence is a sequence generated by multiplying the first sequence and the second sequence; or the third sequence is a sequence generated by modulating the first sequence and the second sequence; or the third sequence is a sequence generated by multiplying a fourth sequence and the second sequence, where the fourth sequence is obtained by performing spreading on the first sequence, or the third sequence is a sequence generated by modulating the fourth sequence and the second sequence.

In some embodiments, a spreading factor for the first sequence is determined based on a length of the second sequence.

In some embodiments, a value of the spreading factor includes at least one of: a value of the length of the second sequence, or a quotient of the value of the length of the second sequence and a first number. The first number is the number of bits having a value of 1 in the first sequence.

In some embodiments, the cell corresponding to the first WUS is a first cell. An association between a sequence ID of the second sequence and a cell ID of the first cell includes the following. The sequence ID is a value obtained by performing a modulo operation on the cell ID with the total number of sequences. The total number of sequences is the total number of cell IDs.

In some embodiments, the first WUS is generated by performing an inverse Fourier transform on at least one subcarrier. The at least one subcarrier is a subcarrier onto which the third sequence subjected to a Fourier transform is mapped.

In some embodiments, the first WUS is generated by performing an inverse Fourier transform on at least one subcarrier. The at least one subcarrier is a subcarrier onto which the third sequence is mapped.

In some embodiments, a first WUS is demodulated by a terminal device as follows.

In step 31, a first WUS is demodulated into a third sequence through a demodulator.

In some embodiments, the terminal device demodulates the first WUS having, i.e., a first waveform 610 in the embodiment as illustrated in FIG. 6, into a third sequence, for example, the third sequence of {S₁(1), S₁(2), S₁(3), 0, 0, 0, 0, 0, 0, S₁(1), S₁(2), S₁(3)}.

In step 32, second information carried in the third sequence is determined.

In some embodiments, the second information is associated with the cell corresponding to the first WUS. The second sequence indicates the second information, and includes at least one of: a complex sequence, such as a CAZAC sequence, a ZC sequence, etc.; or a real sequence, such as a PN sequence, a Gold sequence, an *M* sequence, a Hadamard sequence, etc.

Exemplarily, when the third sequence is {S₁(1), S₁(2), S₁(3), 0, 0, 0, 0, 0, 0, S₁(1), S₁(2), S₁(3)}, the second sequence is determined as {S₁(1), S₁(2), S₁(3)}.

In step 33, first information carried in the third sequence is determined based on the second information.

In some embodiments, the first information is associated with whether to wake up the second receiver. The first sequence indicates the first information.

In some embodiments, the third sequence is a sequence generated by multiplying the first sequence and the second sequence. The first sequence can be obtained when the third sequence and the second sequence are known.

Exemplarily, when the third sequence is {S₁(1), S₁(2), S₁(3), 0, 0, 0, 0, 0, 0, S₁(1), S₁(2), S₁(3)} and the second sequence is {S₁(1), S₁(2), S₁(3)}, the first sequence is {1, 1, 1, 1, 0, 0, 0, 0, 0, 0, 0, 0, 1, 1, 1, 1}.

In some embodiments, the first sequence is subjected to spreading to obtain a fourth sequence, and the third sequence is a sequence generated by multiplying the fourth sequence and the second sequence. Therefore, downsampling needs to be performed on the fourth sequence. For example, when the fourth sequence is {1, 1, 1, 1, 0, 0, 0, 0, 0, 0, 0, 0, 1, 1, 1, 1}, downsampling is performed on the fourth sequence to obtain the first sequence of {1, 0, 0, 1}, which indicates waking up the second receiver.

In some embodiments, the first information is associated with whether to wake up the second receiver. The second sequence indicates both the first information and the second information.

Exemplarily, the third sequence is {S₁₀, S₂₀, S₃₀, 0, 0, 0}, and the second sequence is {S₁₀, S₂₀, S₃₀}. The second sequence indicates waking up the second receiver and the cell corresponding to the first WUS, for example, cell 1.

For specific implementation details of the embodiment on the terminal device side, reference can be made to the embodiment on the network device side, and details are not repeated herein.

To sum up, according to the method provided in this embodiment, the first WUS is received through a first receiver. The first WUS indicates the first information and second information. The first information is associated with whether to wake up the second receiver. The second information is associated with the cell corresponding to the first WUS. Since the second information is associated with the cell corresponding to the first WUS, interference between different cells can be reduced. In addition, compared with a conventional WUS, the first WUS can provide an increased signal coverage range, such that a scope of power-saving benefits can be expanded.

The first WUS in the method provided by this embodiment is obtained through multi-level modulation. With the first WUS, frequency response at multiple subcarrier positions can be increased, such that energy spectrum of the first WUS can be evenly distributed. As a result, the robustness of the first WUS can be improved, and a coverage range of the first WUS can be increased.

In the above embodiments, the embodiment corresponding to FIG. 4 and the embodiment corresponding to FIG. 8 may be implemented independently or may be implemented in combination, and the disclosure is not limited in this regard. FIG. 9 is a schematic diagram of a communication scenario provided by an exemplary embodiment of the disclosure.

In some embodiments, a network device 120 sends a conventional WUS or a first WUS. A coverage range of the conventional WUS is a first coverage range. A coverage range of the first WUS is a second coverage range. The second coverage range is greater than the first coverage range. The conventional WUS has low power consumption but a small coverage range. Compared with the conventional WUS, the first WUS has relatively high power consumption but can wake up a terminal device in a larger coverage range.

In some embodiments, a terminal device includes a first receiver and a second receiver. Power consumption of the first receiver is lower than power consumption of the second receiver. For example, the first receiver is a WUR, and the second receiver is a main radio.

In some embodiments, a first WUS indicates first information and second information. The first information is associated with whether to wake up the second receiver. The second information is associated with a cell corresponding to the first WUS. The first WUS is obtained through multi-level modulation. With the first WUS, frequency response at multiple subcarrier positions can be increased, such that energy spectrum can be evenly distributed. As a result, the first WUS has relatively strong robustness, thereby increasing a coverage range of the first WUS.

In some embodiments, a first terminal device 111 is within the first coverage range, and a second terminal device 112 is within the second coverage range. The first terminal device 111 can receive both the first WUS and the conventional WUS, and the second terminal device 112 can only receive the first WUS.

In some embodiments, the first terminal device 111 receives the first WUS. Since the second information indicated by the first WUS is associated with a cell corresponding to the first WUS, for example, indicating cell 1, the first terminal device 111 is associated with cell 1, and interference between different cells is reduced.

In some embodiments, upon receiving the first WUS, the first terminal device 111 and the second terminal device 112 perform control channel detection based on a time-domain resource associated with the first information and a frequency-domain resource associated with the first information when the signal quality of the first WUS is greater than a first threshold. The control channel detection includes at least one of DRX detection, paging detection, or PDCCH detection.

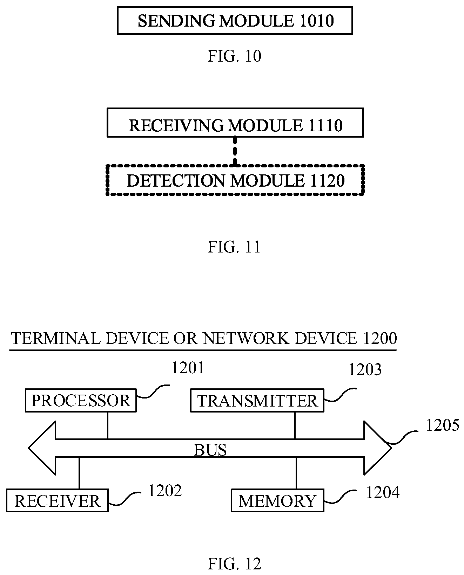

FIG. 10 is a block diagram of an apparatus for WUS transmission provided by an exemplary embodiment of the disclosure. The apparatus may be implemented as a network device or a portion of a network device by using software, hardware, or a combination thereof. The apparatus includes a sending module 1010 configured to send a first WUS.

The first WUS indicates first information and second information. The first information is associated with whether to wake up a second receiver of a terminal device. The terminal device includes a first receiver and the second receiver. Power consumption of the first receiver is lower than power consumption of the second receiver. The second information is associated with a cell corresponding to the first WUS.

In a possible design of the embodiment, the first WUS is a signal received by the first receiver or a signal supported by the first receiver.

In a possible design of the embodiment, the first WUS is a signal obtained through two-level modulation. First-level modulation is performed based on the first information to obtain an intermediate signal. Second-level modulation is performed on the intermediate signal based on the second information to obtain the first WUS. With the first WUS obtained through multi-level modulation, frequency response at multiple subcarrier positions may be increased, such that energy spectrum may be evenly distributed. As a result, the first WUS has relatively strong robustness, thereby increasing a coverage range of the first WUS.

In a possible design of the embodiment, whether the first WUS is received indicates whether to wake up the second receiver of the terminal device to perform control channel detection. The control channel detection includes at least one of DRX detection, paging detection, or PDCCH detection.

In a possible design of the embodiment, when the first WUS is received, it indicates waking up the second receiver of the terminal device to perform control channel detection; and when no first WUS is received, it indicates that the second receiver of the terminal device is not required to be woken up, and control channel detection is not performed.

A manner for generating a third sequence includes a first generation manner and a second generation manner. Different embodiments may use any one of the two generation manners.

### First Generation Manner

In a possible design of the embodiment, the first WUS is generated based on a third sequence. The third sequence is a sequence generated based on a first sequence and a second sequence. The first sequence indicates the first information. The second sequence indicates the second information.

In a possible design of the embodiment, the second sequence is a sequence associated with the cell corresponding to the first WUS. The second sequence includes at least one of: a complex sequence, such as a CAZAC sequence, a ZC sequence, etc.; or a real sequence, such as a PN sequence, a Gold sequence, an *M* sequence, a Hadamard sequence, etc.

Exemplarily, the first sequence is {1, 0, 0, 1} which indicates waking up the second receiver, and the second sequence is {S₁, S₂, S₃} which indicates the cell corresponding to the first WUS, for example, cell 1.

Alternatively, the first sequence is {0, 0, 0, 1} which indicates not waking up the second receiver, and the second sequence is {S₁, S₂} which indicates the cell corresponding to the first WUS, for example, cell 2.

The first sequence indicates the first information, and the second sequence indicates the second information, so that the terminal device can obtain cell-related information and information about waking up the second receiver, such that inter-cell interference can be reduced.

### Second Generation Manner

In a possible design of the embodiment, the first WUS is generated based on a third sequence. The third sequence is a sequence generated based on a first sequence and a second sequence. The second sequence indicates both the first information and the second information.

Exemplarily, the first sequence is {1, 0} which indicates waking up the second receiver, and the second sequence is {S₁₀, S₂₀, S₃₀} which indicates waking up the second receiver and the cell corresponding to the first WUS, for example, cell 1.

Alternatively, the first sequence is {0, 1} which indicates other information, and the second sequence is {S₁₁, S₂₁, S₃₁} which indicates waking up the second receiver and the cell corresponding to the first WUS, for example, cell 2.

The second sequence indicates both the first information and the second information, such that the terminal device can obtain cell-related information and information about waking up the second receiver from the second sequence, and the first information and the second information can be indicated without the first sequence. Therefore, the first sequence may indicate other information.

In a possible design of the embodiment, the first sequence indicates the first information. For example, the first sequence is {1, 0} which indicates waking up the second receiver.

The second sequence indicates both the first information and the second information, and the first sequence indicates the first information, which is equivalent to providing two indications of the first information, thereby improving reliability for obtaining information for waking up the second receiver.

In a possible design of the embodiment, the third sequence is a sequence generated by multiplying the first sequence and the second sequence; or the third sequence is a sequence generated by modulating the first sequence and the second sequence; or the third sequence is a sequence generated by multiplying a fourth sequence and the second sequence, where the fourth sequence is obtained by performing spreading on the first sequence; or the third sequence is a sequence generated by modulating the fourth sequence and the second sequence.

Optionally, spreading is not performed on the first sequence, and the third sequence is generated by multiplying (or modulating) the first sequence and the second sequence. Alternatively, spreading is performed on the first sequence to obtain the fourth sequence, and the third sequence is generated by multiplying (or modulating) the fourth sequence and the second sequence.

In a possible design of the embodiment, each bit having a value of 0 in the first sequence or each bit having a value of 0 in the fourth sequence is not multiplied by any element in the second sequence.

In a possible design of the embodiment, each bit having a value of 1 in the first sequence is multiplied by a corresponding element in the second sequence to generate the third sequence.

In a possible design of the embodiment, each bit having a value of 1 in the fourth sequence is multiplied by a corresponding element in the second sequence to generate the third sequence.

Exemplarily, the first sequence is {1, 1} and the second sequence is {S₁, S₂}. The third sequence is generated by multiplying the first sequence and the second sequence, where each bit having a value of 1 in the first sequence is multiplied by a corresponding element in the second sequence to generate the third sequence of {S₁, S₂, S₁, S₂}.

In a possible design of the embodiment, an *i*-th bit having a value of 1 in the first sequence is multiplied by an *i*-th element in the second sequence to generate the third sequence. The number of bits having a value of 1 in the first sequence is equal to the number of elements in the second sequence. The second sequence includes *x* elements, and *i* is a positive integer not greater than *x*.

In a possible design of the embodiment, an *i*-th bit having a value of 1 in the fourth sequence is multiplied by an i-th element in the second sequence to generate the third sequence. The number of bits having a value of 1 in the first sequence is equal to the number of elements in the second sequence. The second sequence includes *x* elements, and *i* is a positive integer not greater than *x*.

Exemplarily, in a case that the first sequence is {1, 0} and a spreading factor is 4, spreading is performed on the first sequence of {1, 0} to obtain the fourth sequence, that is, {1, 1, 1, 1, 0, 0, 0, 0}. The second sequence is {S₁, S₂, S₃, S₄}, and the third sequence is generated by multiplying the fourth sequence and the second sequence, where an *i*-th bit having a value of 1 in the fourth sequence is multiplied by an *i*-th element in the second sequence to generate the third sequence, that is, {S₁, S₂, S₃, S₄, 0, 0, 0, 0}.

In a possible design of the embodiment, the second sequence includes *x* elements. A *k*-th bit in the first sequence is multiplied by an *i*-th element in the second sequence to generate the third sequence, where *i=k* mod x, and *i* is a positive integer not greater than *x*. The first sequence includes *y* bits, and *k* is a positive integer not greater than *y*.

In a possible design of the embodiment, the second sequence includes *x* elements. A *k*-th bit in the fourth sequence is multiplied by an *i*-th element in the second sequence to generate the third sequence, where *i=k* mod *x*, and *i* is a positive integer not greater than *x*. The fourth sequence includes z bits, and *k* is a positive integer not greater than *z*.

Exemplarily, the second sequence is {S₁, S₂, S₃} which includes three elements, the first sequence is {1, 1, 1, 0, 0, 0, 1, 1, 1, 0, 0, 0}, and a *k*-th bit in the first sequence is multiplied by an *i*-th element in the second sequence to generate the third sequence, that is, {S₁, S₂, S₃, 0, 0, 0, S₁, S₂, S₃, 0, 0, 0}.

The first WUS is generated based on the third sequence, and the third sequence is generated by multiplying the first sequence (or the fourth sequence) and the second sequence, so that the first WUS can indicate both the first information and the second information.

In a possible design of the embodiment, a spreading factor for the first sequence is determined based on a length of the second sequence.

In a possible design of the embodiment, a value of the spreading factor includes at least one of: a value of the length of the second sequence, or a quotient of the value of the length of the second sequence and a first number. The first number is the number of bits having a value of 1 in the first sequence.

Exemplarily, the first sequence is {1, 0, 1, 0}, thus the first number is 2; and the second sequence is {S₁, S₂, S₃, S₄, S₅, S₆}, thus the value of the length of the second sequence is 6. Therefore, the value of the spreading factor may be 6 or 3 (a quotient of 6 and 2). The value of the spreading factor may also be other values, which is not limited in embodiments of the disclosure.

In a possible design of the embodiment, modulation manners for the first WUS include a first modulation manner and a second modulation manner. In different embodiments, any one of the two modulation manners may be used. A Fourier transform is performed on the third sequence in the first modulation manner, and a Fourier transform is not performed on the third sequence in the second modulation manner.

First modulation manner: The first WUS is generated by performing an inverse Fourier transform on at least one subcarrier. The at least one subcarrier is a subcarrier onto which the third sequence subjected to a Fourier transform is mapped.

In a possible design of the embodiment, the first sequence indicates the first information. The second sequence indicates the second information. The first information is associated with whether to wake up the second receiver. The second information is associated with the cell corresponding to the first WUS.

In a possible design of the embodiment, the first WUS is generated based on the third sequence. The third sequence is a sequence generated based on the first sequence and the second sequence.

In a possible design of the embodiment, FIG. 6 is a schematic diagram illustrating modulation of a first WUS provided by an exemplary embodiment of the disclosure. The first WUS is modulated as follows.

In step 11, a first sequence is obtained.

In a possible design of the embodiment, the first sequence is any one of: an original sequence that does not require encoding, an original sequence before encoding, an encoded sequence obtained after encoding the original sequence, or an encoded sequence obtained after performing at least one level of encoding in multi-level encoding on the original sequence.

In step 12, the first sequence is multiplied by a second sequence to generate a third sequence.

In a possible design of the embodiment, spreading is performed on the first sequence. The spreading refers to repeating each bit or each element in a sequence for *K* times, where *K* is a positive integer greater than 1. Taking spreading as an example, assuming that the first sequence is {1, 0, 0, 1} and a spreading factor *K*=4, then a sequence of {1, 1, 1, 1, 0, 0, 0, 0, 0, 0, 0, 0, 1, 1, 1, 1} may be obtained through spreading. In this example, a case where spreading is not performed on the first sequence is used for illustration.

In a possible design of the embodiment, the second sequence is a sequence associated with the cell corresponding to the first WUS. The second sequence includes at least one of: a complex sequence, such as a CAZAC sequence, a ZC sequence, etc.; or a real sequence, such as a PN sequence, a Gold sequence, an *M* sequence, a Hadamard sequence, etc.

In a possible design of the embodiment, the second sequence is {S₁(1), S₁(2), ..., S₁(*m*)}, and a value of *m* is equal to the value of the length of the second sequence. With an example where *m* is 3 for illustration, the second sequence is {S₁(1), S₁(2), S₁(3)}.

In a possible design of the embodiment, the third sequence is a sequence generated by multiplying the first sequence and the second sequence, for example, the third sequence is {S₁(1), S₁(2), S₁(3), 0, 0, 0, 0, 0, 0, S₁(1), S₁(2), S₁(3)}, where y(1) corresponds to S₁(1), y(2) corresponds to S₁(2), y(3) corresponds to S₁(3), y(4) corresponds to 0, and so on until y(12) corresponds to S₁(3).

In step 13, a time-frequency transform is performed on the third sequence to obtain *n* subcarriers.

In a possible design of the embodiment, a time-frequency transform, that is, a DFT, refers to transforming a sequence (a third sequence) in a time domain into frequency-domain data at multiple sampling points. The frequency-domain data obtained after the time-frequency transform is modulated onto at least one subcarrier, for example, *n* subcarriers. *n* is the number of elements of the third sequence. *n* is a positive integer multiple of *m,* and a value of *n* may be selected from {2, 4, 6, 8, 12, 16, 24, 36, 48, 60, 72} or another positive integer. In this example, a value *of n* is 12.

In step 14, an inverse time-frequency transform is performed on the *n* subcarriers to generate the first WUS.

In a possible design of the embodiment, an IFFT is performed on the *n* subcarrier signals to generate the first WUS. A waveform of the first WUS in the time domain is represented as a first waveform 610.

In a possible design of the embodiment, before the IFFT is performed on the *n* subcarrier signals, the *n* subcarrier signals may be multiplexed with another NR signal. An OFDM symbol length of another NR signal is a positive integer multiple of a chip length of the first WUS. The chip length of the first WUS is equal to a length of each symbol, for example, a length of a symbol "1" in the first WUS or a length of a symbol "0" in the first WUS, as illustrated in FIG 6.

DFT is performed on the third sequence, and the OFDM symbol length of another NR signal is a positive integer multiple of the chip length of the first WUS, so that one OFDM symbol can be used to transmit multiple chip information.

Second modulation manner: The first WUS is generated by performing an inverse Fourier transform on at least one subcarrier. The at least one subcarrier is a subcarrier onto which the third sequence is mapped.

In a possible design of the embodiment, the first sequence indicates the first information. The second sequence indicates the second information. The first information is associated with whether to wake up the second receiver. The second information is associated with the cell corresponding to the first WUS.

In a possible design of the embodiment, the first WUS is generated based on the third sequence. The third sequence is a sequence generated based on the first sequence and the second sequence.

In some embodiments, FIG. 7 is a schematic diagram illustrating modulation of a first WUS provided by an exemplary embodiment of the disclosure. The first WUS is modulated as follows.

In step 21, a first sequence is obtained.

In a possible design of the embodiment, the first sequence is any one of: an original sequence that does not require encoding, an original sequence before encoding, an encoded sequence obtained after encoding the original sequence, or an encoded sequence obtained after performing at least one level of encoding in multi-level encoding on the original sequence.

In step 22, the first sequence is multiplied by a second sequence to generate a third sequence.

In a possible design of the embodiment, spreading is performed on the first sequence. The spreading refers to repeating each bit or element in a sequence for *K* times, where *K* is a positive integer greater than 1. Taking spreading as an example, assuming that the first sequence is {1, 0, 0, 1} and a spreading factor *K*=4, then a sequence of {1, 1, 1, 1, 0, 0, 0, 0, 0, 0, 0, 0, 1, 1, 1, 1} may be obtained through spreading. In this example, a case where spreading is not performed on the first sequence is used for illustration.

In a possible design of the embodiment, the second sequence is a sequence associated with the cell corresponding to the first WUS. The second sequence includes at least one of: a complex sequence, such as a CAZAC sequence, a ZC sequence, etc.; or a real sequence, such as a PN sequence, a Gold sequence, an M sequence, a Hadamard sequence, etc.

In a possible design of the embodiment, the second sequence is {S₁(1), S₁(2), ..., S₁(*m*)}, and a value of m is equal to the value of the length of the second sequence. With an example where *m* is 3 for illustration, the second sequence is {S₁(1), S₁(2), S₁(3)}.

In a possible design of the embodiment, the third sequence is a sequence generated by multiplying the first sequence and the second sequence, for example, the third sequence is {S₁(1), S₁(2), S₁(3), 0, 0, 0, 0, 0, 0, S₁(1), S₁(2), S₁(3)}, where y(1) corresponds to S₁(1), y(2) corresponds to S₁(2), y(3) corresponds to S₁(3), y(4) corresponds to 0, and so on until y(12) corresponds to S₁(3).

In step 23, the third sequence is mapped onto *n* subcarriers.

In a possible design of the embodiment, a DFT is not performed on the third sequence, and the third sequence is directly mapped onto *n* subcarriers. *n* is the number of elements in the third sequence. *n* is a positive integer multiple of *m,* and a value of *n* may be selected from {2, 4, 6, 8, 12, 16, 24, 36, 48, 60, 72} or another positive integer. In this example, a value *of n* is 12.

In step 24, an inverse time-frequency transform is performed on the *n* subcarriers to generate the first WUS.

In a possible design of the embodiment, an IFFT is performed on the *n* subcarrier signals to generate the first WUS. A waveform of the first WUS in the time domain is represented as a second waveform 710.

In a possible design of the embodiment, before the IFFT is performed on the *n* subcarrier signals, the *n* subcarrier signals may be multiplexed with another NR signal. An OFDM symbol length of another NR signal is equal to a chip length of the first WUS. The chip length of the first WUS is equal to a length of each symbol, for example, a length of a symbol "1" in the first WUS or a length of a symbol "0" in the first WUS, as illustrated in FIG. 7.

By not performing the DFT or another pre-transformation on the third sequence, the OFDM symbol length of another NR signal is equal to the chip length of the first WUS, resulting in better compatibility between the first WUS and another NR signal (an OFDM signal).

In a possible design of the embodiment, multiple candidate sequences are preset for the second sequence. Each candidate sequence has a respective corresponding sequence ID, and each candidate sequence corresponds to one or more cells. In other words, each candidate sequence corresponds to one or more cell IDs. The cell corresponding to the first WUS is a first cell. An association between a sequence ID of the second sequence and a cell ID of the first cell includes the following. The sequence ID is a value obtained by performing a modulo operation on the cell ID with the total number of sequences. The total number of sequences is the total number of cell IDs.

Exemplarily, sequence ID=cell ID mod *X,* where *X* represents the total number of sequences, and the cell ID is equal to a selected sequence ID. When there are 20 cells (cell IDs are 0 to 19), the cell ID is divided by 20 to obtain a remainder, and the remainder is a value ranging from 0 to 19. If the value is 8, a sequence with a sequence ID of 8 is selected.

Optionally, the total number of sequences is the number of sequences associated with cell IDs. The sequences associated with cell IDs include the second sequence.

Exemplarily, sequence ID=cell ID mod *X,* where *X* represents the total number of sequences, and the cell ID is equal to a selected sequence ID. When there are 128 cells (cell IDs are 0 to 127) and 20 sequences associated with cell IDs (sequence IDs are 0 to 19), the cell ID is divided by 20 to obtain a remainder, and the remainder is a value ranging from 0 to 19. If the value is 8, a sequence with a sequence ID of 8 is selected.

There may be another association(s) between the sequence ID of the second sequence and the cell ID of the first cell, and embodiments of the disclosure are not limited in this regard. With different associations between sequence IDs and cell IDs, requirements for a sequence ID and a cell ID in multiple scenarios can be met.

In a possible design of the embodiment, the first WUS further carries ID information of a target terminal device. When the first WUS carries the ID information of the target terminal device, the first WUS is received by the target terminal device.

In a possible design of the embodiment, the first WUS further carries group ID information of a target terminal device group. When the first WUS carries the group ID information of the target terminal device group, the first WUS is received by all or part of terminal devices in the target terminal device group.

In a possible design of the embodiment, waking up a terminal device is indicated by ID information or group ID information, or waking up a terminal device is indicated by mapping different ID information or different group ID information through a bitmap.

This embodiment is illustrated by taking one sending module 1010 as an example, and the number of sending modules 1010 are not limited in this embodiment.

For an introduction to functions of the sending module 1010, reference can be made to the content of step 410 in the embodiment illustrated in FIG. 4.

FIG. 11 is a block diagram of an apparatus for WUS reception provided by an exemplary embodiment of the disclosure. The apparatus may be implemented as a terminal device or a portion of a terminal device by using software, hardware, or a combination thereof. The apparatus includes a first receiver and a second receiver. Power consumption of the first receiver is lower than power consumption of the second receiver. The apparatus includes a receiving module 1110 configured to receive a first WUS through the first receiver. The first WUS indicates first information and second information. The first information is associated with whether to wake up the second receiver. The second information is associated with a cell corresponding to the first WUS.

In a possible design of the embodiment, the apparatus further includes a detection module 1120 configured to perform control channel detection based on the first WUS. The control channel detection includes at least one of DRX detection, paging detection, or PDCCH detection.

In a possible design of the embodiment, the detection module 1120 is configured to detect signal quality of the first WUS. The signal quality is determined by an SINR or a signal strength. The SINR refers to a ratio of a signal to noise and is usually in a unit of dB. When a value of the SINR is relatively large, it indicates that there is little noise and the signal quality is relatively good. When a value of the SINR is relatively small, it indicates that there is much noise and the signal quality is relatively poor. The signal strength refers to a strength or a power level of a received signal and is usually in a unit of dBm. When a value of the signal strength is relatively large, it indicates that the signal strength is relatively high. When a value of the signal strength is relatively small, it indicates that the signal strength is relatively low.

In a possible design of the embodiment, when the signal quality of the first WUS is greater than a first threshold, the detection module 1120 is configured to perform control channel detection based on a time-domain resource associated with the first information and a frequency-domain resource associated with the first information; and when the signal quality of the first WUS is less than the first threshold, the detection module 1120 is configured to perform control channel detection.

In a possible design of the embodiment, the first threshold is a preset threshold or a threshold configured by a network device.

In a possible design of the embodiment, when the signal quality of the first WUS is equal to the first threshold, the detection module 1120 is configured to perform control channel detection based on a time-domain resource associated with the first information and a frequency-domain resource associated with the first information; or to directly perform control channel detection.

Exemplarily, the first threshold is -60 dBm. When a signal strength of the first WUS is -50 dBm, which is greater than -60 dBm, control channel detection is performed based on a time-domain resource associated with the first information and a frequency-domain resource associated with the first information. As illustrated in FIG. 5, the first WUS is received at time instant *T0,* a time period between time instant *T1* and time instant *T2* is a first slot after the first WUS is received, and the first slot is a time-domain resource associated with the first information. At a start of the first slot, control channel detection is performed in a frequency-domain resource indicated by a CORESET. The frequency-domain resource indicated by the CORESET is a frequency-domain resource associated with the first information. When a signal strength of the first WUS is -70 dBm, which is less than -60 dBm, control channel detection is directly performed.

In a possible design of the embodiment, the first WUS is a signal received by the first receiver or a signal supported by the first receiver.

In a possible design of the embodiment, the first WUS is a signal obtained through two-level modulation. First-level modulation is performed based on the first information to obtain an intermediate signal. Second-level modulation is performed on the intermediate signal based on the second information to obtain the first WUS. With the first WUS obtained through multi-level modulation, frequency response at multiple subcarrier positions may be increased, such that energy spectrum may be evenly distributed. As a result, the first WUS has relatively strong robustness, thereby increasing a coverage range of the first WUS.

In a possible design of the embodiment, whether the first WUS is received indicates whether to wake up the second receiver of the apparatus to perform control channel detection. The control channel detection includes at least one of DRX detection, paging detection, or PDCCH detection.

In a possible design of the embodiment, when the first WUS is received, it indicates waking up the second receiver of the apparatus to perform control channel detection; and when no first WUS is received, it indicates that the second receiver of the apparatus is not required to be woken up, and control channel detection is not performed.

A manner for generating a third sequence includes a first generation manner and a second generation manner. Different embodiments may use any one of the two generation manners.

### First Generation Manner

In a possible design of the embodiment, the first WUS is generated based on a third sequence. The third sequence is a sequence generated based on a first sequence and a second sequence. The first sequence indicates the first information. The second sequence indicates the second information.

In a possible design of the embodiment, the second sequence is a sequence associated with the cell corresponding to the first WUS. The second sequence includes at least one of: a complex sequence, such as a CAZAC sequence, a ZC sequence, etc.; or a real sequence, such as a PN sequence, a Gold sequence, an M sequence, a Hadamard sequence, etc.

Exemplarily, the first sequence is {1, 0, 0, 1} which indicates waking up the second receiver, and the second sequence is {S₁, S₂, S₃} which indicates the cell corresponding to the first WUS, for example, cell 1.

Alternatively, the first sequence is {0, 0, 0, 1} which indicates not waking up the second receiver, and the second sequence is {S₁, S₂} which indicates the cell corresponding to the first WUS, for example, cell 2.

The first sequence indicates the first information, and the second sequence indicates the second information, so that the apparatus can obtain cell-related information and information about waking up the second receiver, such that inter-cell interference can be reduced.

### Second Generation Manner

In a possible design of the embodiment, the first WUS is generated based on a third sequence. The third sequence is a sequence generated based on a first sequence and a second sequence. The second sequence indicates both the first information and the second information.

Exemplarily, the first sequence is {1, 0} which indicates waking up the second receiver, and the second sequence is {S₁₀, S₂₀, S₃₀} which indicates waking up the second receiver and the cell corresponding to the first WUS, for example, cell 1.

Alternatively, the first sequence is {0, 1} which indicates other information, and the second sequence is {S₁₁, S₂₁, S₃₁} which indicates waking up the second receiver and the cell corresponding to the first WUS, for example, cell 2.

The second sequence indicates both the first information and the second information, such that the apparatus can obtain cell-related information and information about waking up the second receiver from the second sequence, and the first information and the second information can be indicated without the first sequence. Therefore, the first sequence may indicate other information.

In a possible design of the embodiment, the first sequence indicates the first information. For example, the first sequence is {1, 0} which indicates waking up the second receiver.

The second sequence indicates both the first information and the second information, and the first sequence indicates the first information, which is equivalent to providing two indications of the first information, thereby improving reliability for obtaining information about waking up the second receiver.

In a possible design of the embodiment, the third sequence is a sequence generated by multiplying the first sequence and the second sequence; or the third sequence is a sequence generated by modulating the first sequence and the second sequence; or the third sequence is a sequence generated by multiplying a fourth sequence and the second sequence, where the fourth sequence is obtained by performing spreading on the first sequence; or the third sequence is a sequence generated by modulating the fourth sequence and the second sequence.

Optionally, spreading is not performed on the first sequence, and the third sequence is generated by multiplying (or modulating) the first sequence and the second sequence. Alternatively, spreading is performed on the first sequence to obtain the fourth sequence, and the third sequence is generated by multiplying (or modulating) the fourth sequence and the second sequence.

In a possible design of the embodiment, each bit having a value of 0 in the first sequence or each bit having a value of 0 in the fourth sequence is not multiplied by any element in the second sequence.

In a possible design of the embodiment, each bit having a value of 1 in the first sequence is multiplied by a corresponding element in the second sequence to generate the third sequence.

In a possible design of the embodiment, each bit having a value of 1 in the fourth sequence is multiplied by a corresponding element in the second sequence to generate the third sequence.

Exemplarily, the first sequence is {1, 1} and the second sequence is {S₁, S₂}. The third sequence is generated by multiplying the first sequence and the second sequence, where each bit having a value of 1 in the first sequence is multiplied by a corresponding element in the second sequence to generate the third sequence of {S₁, S₂, S₁, S₂}.

In a possible design of the embodiment, an *i*-th bit having a value of 1 in the first sequence is multiplied by an *i*-th element in the second sequence to generate the third sequence. The number of bits having a value of 1 in the first sequence is equal to the number of elements in the second sequence. The second sequence includes *x* elements, and *i* is a positive integer not greater than *x*.

In a possible design of the embodiment, an *i*-th bit having a value of 1 in the fourth sequence is multiplied by an *i*-th element in the second sequence to generate the third sequence. The number of bits having a value of 1 in the first sequence is equal to the number of elements in the second sequence. The second sequence includes *x* elements, and *i* is a positive integer not greater than x.

Exemplarily, in a case that the first sequence is {1, 0} and a spreading factor is 4, spreading is performed on the first sequence of {1, 0} to obtain the fourth sequence, that is, {1, 1, 1, 1, 0, 0, 0, 0}. The second sequence is {S₁, S₂, S₃, S₄}, and the third sequence is generated by multiplying the fourth sequence and the second sequence, where an *i*-th bit having a value of 1 in the fourth sequence is multiplied by an i-th element in the second sequence to generate the third sequence, that is, {S₁, S₂, S₃, S₄, 0, 0, 0, 0}.

In a possible design of the embodiment, the second sequence includes x elements. A *k*-th bit in the first sequence is multiplied by an *i*-th element in the second sequence to generate the third sequence, where *i=k* mod *x,* and *i* is a positive integer not greater than *x.* The first sequence includes *y* bits, and *k* is a positive integer not greater than *y.*

In a possible design of the embodiment, the second sequence includes *x* elements. A *k*-th bit in the fourth sequence is multiplied by an *i*-th element in the second sequence to generate the third sequence, where *i=k* mod *x*, and *i* is a positive integer not greater than *x*. The fourth sequence includes *z* bits, and *k* is a positive integer not greater than *z*.

Exemplarily, the second sequence is {S₁, S₂, S₃} which includes three elements, the first sequence is {1, 1, 1, 0, 0, 0, 1, 1, 1, 0, 0, 0}, and a *k*-th bit in the first sequence is multiplied by an *i*-th element in the second sequence to generate the third sequence, that is, {S₁, S₂, S₃, 0, 0, 0, S₁, S₂, S₃, 0, 0, 0}.

The first WUS is generated based on the third sequence, and the third sequence is generated by multiplying the first sequence (or the fourth sequence) and the second sequence, so that the first WUS can indicate both the first information and the second information.

In a possible design of the embodiment, a spreading factor for the first sequence is determined based on a length of the second sequence.

In a possible design of the embodiment, a value of the spreading factor includes at least one of: a value of the length of the second sequence, or a quotient of the value of the length of the second sequence and a first number. The first number is the number of bits having a value of 1 in the first sequence.

Exemplarily, the first sequence is {1, 0, 1, 0}, thus the first number is 2; and the second sequence is {S₁, S₂, S₃, S₄, S₅, S₆}, thus the value of the length of the second sequence is 6. Therefore, the value of the spreading factor may be 6 or 3 (a quotient of 6 and 2). The value of the spreading factor may also be other values, which is not limited in embodiments of the disclosure.

In a possible design of the embodiment, modulation manners for the first WUS include two manners of a first modulation manner and a second modulation manner. In different embodiments, any one of the two modulation manners may be used. A Fourier transform is performed on the third sequence in the first modulation manner, and a Fourier transform is not performed on the third sequence in the second modulation manner.

First modulation manner: The first WUS is generated by performing an inverse Fourier transform on at least one subcarrier. The at least one subcarrier is a subcarrier onto which the third sequence subjected to a Fourier transform is mapped.

Second modulation manner: The first WUS is generated by performing an inverse Fourier transform on at least one subcarrier. The at least one subcarrier is a subcarrier onto which the third sequence is mapped.

In a possible design of the embodiment, a first WUS is demodulated as follows.

In step 31, a first WUS is demodulated into a third sequence through a demodulator.

In a possible design of the embodiment, the apparatus demodulates the first WUS having, i.e., a first waveform 610 in the embodiment as illustrated in FIG. 6, into a third sequence, for example, the third sequence of {S₁(1), S₁(2), S₁(3), 0, 0, 0, 0, 0, 0, S₁(1), S₁(2), S₁(3)}.

In step 32, second information carried in the third sequence is determined.

In a possible design of the embodiment, the second information is associated with the cell corresponding to the first WUS. The second sequence indicates the second information and includes at least one of: a complex sequence, such as a CAZAC sequence, a ZC sequence, etc.; or a real sequence, such as a PN sequence, a Gold sequence, an *M* sequence, a Hadamard sequence, etc.

Exemplarily, when the third sequence is {S₁(1), S₁(2), S₁(3), 0, 0, 0, 0, 0, 0, S₁(1), S₁(2), S₁(3)}, the second sequence is determined as {S₁(1), S₁(2), S₁(3)}.

In step 33, first information carried in the third sequence is determined based on the second information.

In a possible design of the embodiment, the first information is associated with whether to wake up the second receiver. The first sequence indicates the first information.

In a possible design of the embodiment, the third sequence is a sequence generated by multiplying the first sequence and the second sequence. The first sequence can be obtained when the third sequence and the second sequence are known.

Exemplarily, when the third sequence is {S₁(1), S₁(2), S₁(3), 0, 0, 0, 0, 0, 0, S₁(1), S₁(2), S₁(3)} and the second sequence is {S₁(1), S₁(2), S₁(3)}, the first sequence is {1, 1, 1, 1, 0, 0, 0, 0, 0, 0, 0, 0, 1, 1, 1, 1}.

In a possible design of the embodiment, the first sequence is subjected to spreading to obtain a fourth sequence, and the third sequence is a sequence generated by multiplying the fourth sequence and the second sequence. Therefore, downsampling needs to be performed on the fourth sequence. For example, when the fourth sequence is {1, 1, 1, 1, 0, 0, 0, 0, 0, 0, 0, 0, 1, 1, 1, 1}, downsampling is performed on the fourth sequence to obtain the first sequence of {1, 0, 0, 1}, which indicates waking up the second receiver.

In a possible design of the embodiment, the first information is associated with whether to wake up the second receiver. The second sequence indicates both the first information and the second information.

Exemplarily, the third sequence is {S₁₀, S₂₀, S₃₀, 0, 0, 0}, and the second sequence is {S₁₀, S₂₀, S₃₀}. The second sequence indicates waking up the second receiver and the cell corresponding to the first WUS, for example, cell 1.

In a possible design of the embodiment, multiple candidate sequences are preset for the second sequence. Each candidate sequence has a respective corresponding sequence ID, and each candidate sequence corresponds to one or more cells. In other words, each candidate sequence corresponds to one or more cell IDs. The cell corresponding to the first WUS is a first cell. An association between a sequence ID of the second sequence and a cell ID of the first cell includes the following. The sequence ID is a value obtained by performing a modulo operation on the cell ID with the total number of sequences. The total number of sequences is the total number of cell IDs.

Exemplarily, sequence ID=cell ID mod *X,* where *X* represents the total number of sequences, and the cell ID is equal to a selected sequence ID. When there are 20 cells (cell IDs are 0 to 19), the cell ID is divided by 20 to obtain a remainder, and the remainder is a value ranging from 0 to 19. If the value is 8, a sequence with a sequence ID of 8 is selected.

Optionally, the total number of sequences is the number of sequences associated with cell IDs. The sequences associated with cell IDs include the second sequence.

Exemplarily, sequence ID=cell ID mod *X,* where *X* represents the total number of sequences, and the cell ID is equal to a selected sequence ID. When there are 128 cells (cell IDs are 0 to 127) and 20 sequences associated with cell IDs (sequence IDs are 0 to 19), the cell ID is divided by 20 to obtain a remainder, and the remainder is a value ranging from 0 to 19. If the value is 8, a sequence with a sequence ID of 8 is selected.

There may be another association(s) between the sequence ID of the second sequence and the cell ID of the first cell, and embodiments of the disclosure are not limited in this regard. With different associations between sequence IDs and cell IDs, requirements for a sequence ID and a cell ID in multiple scenarios can be met.

This embodiment is illustrated by taking one receiving module 1110 and one detection module 1120 as an example, and the number of receiving modules 1110 and detection modules 1120 are not limited in this embodiment.

For an introduction to functions of the receiving module 1110, reference can be made to the content of step 810 in the embodiment illustrated in FIG. 8.

For an introduction to functions of the detection module 1120, reference can be made to the content of step 810 in the embodiment illustrated in FIG. 8.

FIG. 12 is a schematic structural diagram of a terminal device or a network device 1200 provided by an exemplary embodiment of the disclosure. The terminal device or the network device 1200 includes a processor 1201, a receiver 1202, a transmitter 1203, a memory 1204, and a bus 1205.

The processor 1201 includes one or more processing cores. The processor 1201 executes various function applications and information processing by running software programs and modules. In some embodiments, the processor 1201 may be configured to implement functions and steps of the detection module 1120.

The receiver 1202 and the transmitter 1203 may be implemented as a transceiver assembly. The transceiver assembly may be a communication chip and may be referred to as a transceiver. In some embodiments, the receiver 1202 includes a first receiver and a second receiver. Power consumption of the first receiver is lower than power consumption of the second receiver. The receiver 1202 may be configured to implement functions and steps of the receiving module 1110. In some embodiments, the transmitter 1203 may be configured to implement functions and steps of the transmitting module 1010.

The memory 1204 is connected to the processor 1201 via the bus 1205.

The memory 1204 may be configured to store at least one instruction. The processor 1201 is configured to execute the at least one instruction, so as to implement various steps in the above method embodiments.

In addition, the memory 1204 may be implemented by any type of volatile storage device or non-volatile storage device or a combination thereof. The volatile storage device or the non-volatile storage devices includes, but is not limited to, a magnetic disk or an optical disc, electrically-erasable programmable read-only memory (EEPROM), an erasable programmable read-only memory (EPROM), a static random-access memory (SRAM), a read-only memory (ROM), a magnetic memory, a flash memory, and a programmable read-only memory (PROM).

In some embodiments, the receiver 1202 independently receives signals/data, or the processor 1201 controls the receiver 1202 to receive signals/data, or the processor 1201 requests the receiver 1202 to receive signals/data, or the processor 1201 cooperates with the receiver 1202 to receive signals/data.

In some embodiments, the transmitter 1203 independently sends signals/data, or the processor 1201 controls the transmitter 1203 to transmit signals/data, or the processor 1201 requests the transmitter 1203 to send signals/data, or the processor 1201 cooperates with the transmitter 1203 to send signals/data.

In an exemplary embodiment, a computer-readable storage medium is further provided. The computer-readable storage medium stores at least one piece of program code. The at least one piece of program code is loaded and executed by a processor to implement the method for WUS reception or the method for WUS transmission provided by the above method embodiments.

In an exemplary embodiment, a chip is further provided. The chip includes programmable a logic circuitry and/or program instructions. When the chip runs on a terminal device or a network device, the chip is configured to implement the method for WUS reception or the method for WUS transmission provided by the above method embodiments.

In an exemplary embodiment, a computer program product or a computer program is further provided. The computer program product or the computer program includes computer instructions. The computer instructions are stored in a computer-readable storage medium. A processor is configured to obtain the computer instructions stored in the computer-readable storage medium, and to execute the computer instructions to implement the method for WUS reception or the method for WUS transmission provided by the above method embodiments.

Those of ordinary skill in the art may understand that all or some of the steps of the above embodiments may be implemented by hardware, or may be implemented by a program instructing relevant hardware. The program may be stored in a computer-readable storage medium. The storage medium may be a ROM, a magnetic disk, an optical disc, etc.

The foregoing elaborations are merely exemplary embodiments of the disclosure and are not intended for limiting the disclosure. Any modification, equivalent replacement, improvement, and the like made within the concept and principle of the disclosure shall fall within the protection scope of the disclosure.

## Claims

1. A method for wake-up signal (WUS) reception, the method being performed by a terminal device, the terminal device comprising a first receiver and a second receiver, power consumption of the first receiver being lower than power consumption of the second receiver, and the method comprising:
receiving a first WUS through the first receiver,
wherein the first WUS indicates first information and second information, the first information is associated with whether to wake up the second receiver, and the second information is associated with a cell corresponding to the first WUS.

2. The method of claim 1, wherein the first WUS is generated based on a third sequence, and the third sequence is a sequence generated based on a first sequence and a second sequence,
wherein the first sequence indicates the first information, and the second sequence indicates the second information.

3. The method of claim 1, wherein the first WUS is generated based on a third sequence, and the third sequence is a sequence generated based on a first sequence and a second sequence,
wherein the second sequence indicates both the first information and the second information.

4. The method of claim 3, wherein the first sequence indicates the first information.

5. The method of any one of claims 2 to 4, wherein
the third sequence is a sequence generated by multiplying the first sequence and the second sequence; or
the third sequence is a sequence generated by modulating the first sequence and the second sequence; or
the third sequence is a sequence generated by multiplying a fourth sequence and the second sequence, and the fourth sequence is obtained by performing spreading on the first sequence; or
the third sequence is a sequence generated by modulating the fourth sequence and the second sequence.

6. The method of claim 5, wherein a spreading factor for the first sequence is determined based on a length of the second sequence.

7. The method of claim 6, wherein a value of the spreading factor comprises at least one of:
a value of the length of the second sequence; or
a quotient of the value of the length of the second sequence and a first number, wherein the first number is a number of bits having a value of 1 in the first sequence.

8. The method of any one of claims 2 to 7, wherein the cell corresponding to the first WUS is a first cell, and an association between a sequence identification (ID) of the second sequence and a cell ID of the first cell comprises:
the sequence ID is a value obtained by performing a modulo operation on the cell ID with a total quantity of sequences, and the total quantity of sequences is a total quantity of cell IDs.

9. The method of any one of claims 2 to 8, wherein
the first WUS is generated by performing an inverse Fourier transform on at least one subcarrier, and the at least one subcarrier is a subcarrier onto which a third sequence subjected to a Fourier transform is mapped.

10. The method of any one of claims 2 to 8, wherein
the first WUS is generated by performing an inverse Fourier transform on at least one subcarrier, and the at least one subcarrier is a subcarrier onto which the third sequence is mapped.

11. The method of any one of claims 1 to 10, further comprising:
performing control channel detection based on the first WUS,
wherein the control channel detection comprises at least one of discontinuous reception (DRX) detection, paging detection, or physical downlink control channel (PDCCH) detection.

12. The method of claim 11, wherein performing control channel detection based on the first WUS comprises:
performing control channel detection based on a time-domain resource associated with the first information and a frequency-domain resource associated with the first information in response to a signal quality of the first WUS being greater than a first threshold; and
performing control channel detection in response to the signal quality of the first WUS being less than the first threshold.

13. A method for wake-up signal (WUS) reception, the method being performed by a network device, and the method comprising:
sending a first WUS,
wherein the first WUS indicates first information and second information, the first information is associated with whether to wake up a second receiver of a terminal device, the terminal device comprises a first receiver and the second receiver, power consumption of the first receiver is lower than power consumption of the second receiver, and the second information is associated with a cell corresponding to the first WUS.

14. The method of claim 13, wherein the first WUS is generated based on a third sequence, and the third sequence is a sequence generated based on a first sequence and a second sequence,
wherein the first sequence indicates the first information, and the second sequence indicates the second information.

15. The method of claim 13, wherein the first WUS is generated based on a third sequence, and the third sequence is a sequence generated based on a first sequence and a second sequence,
wherein the second sequence indicates both the first information and the second information.

16. The method of claim 15, wherein the first sequence indicates the first information.

17. The method of any one of claims 14 to 16, wherein
the third sequence is a sequence generated by multiplying the first sequence and the second sequence; or
the third sequence is a sequence generated by modulating the first sequence and the second sequence; or
the third sequence is a sequence generated by multiplying a fourth sequence and the second sequence, and the fourth sequence is obtained by performing spreading on the first sequence; or
the third sequence is a sequence generated by modulating the fourth sequence and the second sequence.

18. The method of claim 17, wherein a spreading factor for the first sequence is determined based on a length of the second sequence.

19. The method of claim 18, wherein a value of the spreading factor comprises at least one of:
a value of the length of the second sequence; or
a quotient of the value of the length of the second sequence and a first quantity,
wherein the first quantity is a quantity of bits having a value of 1 in the first sequence.

20. The method of any one of claims 14 to 19, wherein the cell corresponding to the first WUS is a first cell, and an association between a sequence identification (ID) of the second sequence and a cell ID of the first cell comprises:
the sequence ID is a value obtained by performing a modulo operation on the cell ID with a total quantity of sequences, and the total quantity of sequences is a total quantity of cell IDs.

21. The method of any one of claims 14 to 20, wherein
the first WUS is generated by performing an inverse Fourier transform on at least one subcarrier, and the at least one subcarrier is a subcarrier onto which a third sequence subjected to a Fourier transform is mapped.

22. The method of any one of claims 14 to 20, wherein
the first WUS is generated by performing an inverse Fourier transform on at least one subcarrier, and the at least one subcarrier is a subcarrier onto which the third sequence is mapped.

23. An apparatus for wake-up signal (WUS) reception, the apparatus comprising a first receiver and a second receiver, power consumption of the first receiver being lower than power consumption of the second receiver, and the apparatus comprising:
a receiving module configured to receive a first WUS through the first receiver,
wherein the first WUS indicates first information and second information, the first information is associated with whether to wake up the second receiver, and the second information is associated with a cell corresponding to the first WUS.

24. An apparatus for wake-up signal (WUS) transmission, the apparatus comprising:
a sending module configured to send a first WUS,
wherein the first WUS indicates first information and second information, the first information is associated with whether to wake up a second receiver of a terminal device, the terminal device comprises a first receiver and the second receiver, power consumption of the first receiver is lower than power consumption of the second receiver, and the second information is associated with a cell corresponding to the first WUS.

25. A terminal device, comprising:
a processor;
a transceiver connected to the processor; and
a memory configured to store executable instructions of the processor,
wherein the processor is configured to load and execute the executable instructions to perform the method for wake-up signal (WUS) reception of any one of claims 1 to 12.

26. A network device, comprising:
a processor;
a transceiver connected to the processor; and
a memory configured to store executable instructions of the processor,
wherein the processor is configured to load and execute the executable instructions to perform the method for wake-up signal (WUS) transmission of any one of claims 13 to 22.

27. A computer-readable storage medium configured to store at least one piece of program code, and the at least one piece of program code is loaded and executed by a processor to perform the method for wake-up signal (WUS) reception of any one of claims 1 to 12, or the method for WUS transmission of any one of claims 13 to 22.

28. A chip comprising a programmable logic circuitry and/or program instructions, wherein when the chip runs on a terminal device or a network device, the chip is configured to implement the method for wake-up signal (WUS) reception of any one of claims 1 to 12, or the method for WUS transmission of any one of claims 13 to 22.

29. A computer program product comprising computer instructions, the computer instructions are stored in a computer-readable storage medium, a processor is configured to obtain the computer instructions stored in the computer-readable storage medium, and to execute the computer instructions to implement the method for wake-up signal (WUS) reception of any one of claims 1 to 12, or the method for WUS transmission of any one of claims 13 to 22.
